# EUROPÄISCHE PATENTSCHRIFT

(11) **EP 2 659 317 B1**
(45) Veröffentlichungstag und Bekanntmachung des Hinweises auf die Patenterteilung: **25.01.2023**
(21) Anmeldenummer: 11796931.1
(22) Anmeldetag: 23.11.2011
(51) Int. Cl.: G05B 19/042, G06F 9/445

(54) **FELDGERÄT MIT LANGZEIT-FIRMWARE-KOMPATIBILITÄT**
FIELD DEVICE HAVING LONG-TERM FIRMWARE COMPATIBILITY
APPAREIL DE TERRAIN AVEC COMPATIBILITÉ À LONG TERME DU MICROLOGICIEL

(30) Priorität: 28.12.2010 DE 102010064279
(43) Veröffentlichungstag der Anmeldung: 06.11.2013
(73) Patentinhaber: Endress+Hauser Flowtec AG, 4153 Reinach (CH)
(72) Erfinder: WYSS, Juerg, CH-4107 Ettingen (CH); COLUCCI, Marco, 79541 Lörrach (DE); ELLE, André, 79595 Rümmingen (DE)
(74) Vertreter: Andres, Angelika Maria
(86) Internationale Anmeldenummer: PCT/EP2011/070862
(87) Internationale Veröffentlichungsnummer: WO 2012/089429

(56) Entgegenhaltungen:
- EP-A1- 1 720 097
- EP-A1- 2 237 123
- EP-A2- 1 688 840
- JP-A- 2003 015 895
- US-A1- 2007 168 571

## Beschreibung

Die vorliegende Erfindung betrifft ein Feldgerät zur Erfassung und/oder Beeinflussung von Prozessvariablen in der Prozessautomatisierungstechnik sowie ein Verfahren zum Langzeit-Erhalten der Firmware-Kompatibilität eines Feldgerätes.

In der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Eine Vielzahl solcher Feldgeräte wird von der Firma Endress + Hauser hergestellt und vertrieben.

In modernen Industrieanlagen sind Feldgeräte in der Regel über ein Datenübertragungssystem mit übergeordneten Einheiten verbunden. Das Datenübertragungssystem kann beispielsweise durch ein drahtloses und/oder drahtgebundenes Bussystem (z.B. Profibus^{®}, Foundation^{®} Fieldbus, HART^{®}, etc.) oder durch eine Stromschleife (z.B. gemäß dem 4-20 mA-Standard) gebildet werden. Bei den übergeordneten Einheiten handelt es sich in der Regel um Leitsysteme bzw. Steuereinheiten, wie beispielsweise SPS (speicherprogrammierbare Steuerung) oder PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte.

Feldgeräte weisen in der Regel mehrere Module bzw. Baugruppen auf, die jeweils eine Hardware und eine, der Hardware zugeordnete Firmware aufweisen. Herstellerseitig werden die einzelnen Module so miteinander kombiniert und deren Firmwares so aufeinander abgestimmt, dass die Firmwares der einzelnen Module des Feldgerätes miteinander kompatibel sind (interne Kompatibilität bzw. interne Interoperabilität). Aus den Firmwares der einzelnen Module eines Feldgerätes (und gegebenenfalls weiteren Firmware- und/oder Software-Komponenten des Feldgerätes) wird die Gesamt-Software des Feldgerätes gebildet bzw. generiert. Die Gesamt-Software ist maßgeblich für die Interoperabilität des Feldgerätes (als Ganzes) nach außen, insbesondere mit Dritt-Geräten (externe Kompatibilität bzw. externe Interoperabilität). Die externe Kompatibilität wird in der Regel dadurch erzielt, dass zu dem betreffenden Feldgerät in Entsprechung zu dessen Gesamt-Software Informationen zur Geräteintegration (beispielsweise eine Gerätebeschreibung oder ein Gerätetreiber) bereitgestellt werden. Ein Dritt-Gerät (beispielsweise ein Bedienwerkzeug oder ein Engineering-Werkzeug) kann dann auf diese Informationen zur Geräteintegration zugreifen (indem diese beispielsweise auf dem Dritt-Gerät implementiert und/oder gespeichert sind) und entsprechend dieser Informationen zur Geräteintegration mit dem betreffenden Feldgerät interagieren und kommunizieren. Um für einen Nutzer eine einfache Zuordnung von zugehörigen Informationen zur Geräteintegration zu einem betreffenden Feldgerät zu ermöglichen, wird für die Gesamt-Software in der Regel eine separate, für die Gesamt-Software spezifische Versionennummer vergeben. Anhand dieser Versionennummer der Gesamt-Software kann dann ein Nutzer die zugehörigen Informationen zur Geräteintegration bestimmen, ohne dass er sich mit den Versionen der einzelnen Firmwares der Module auseinandersetzen muss.

Über die Zeit werden herstellerseitig zu einzelnen Modulen immer wieder neue Firmware-Versionen erstellt. Dies bedeutet, dass die Module von neu ausgelieferten Feldgeräten oftmals andere Firmware-Versionen als die Module von älteren Feldgeräten aufweisen. Die Firmware-Versionen von neu ausgelieferten Feldgeräten sind dann wiederum untereinander abgestimmt, so dass eine interne Kompatibilität gegeben ist. Weiterhin werden zu neu ausgelieferten Feldgeräten wiederum entsprechende Informationen zur Geräteintegration bereitgestellt, so dass eine externe Kompatibilität ermöglicht wird.

EP 1 688 840 A2 offenbart automatisches Aktualisieren der Firmware von Geräten in einem industriellen Kontrollsystem, wobei immer die aktuellste Firmwareversion eingesetzt wird.

US 2007/168571 A1 offenbart für Speicherplattensysteme in einem Computer, wobei nicht Versionsinformationen verglichen werden sondern Kompatibilitätsprobleme erkannt werden. Diese werden dem Nutzer signalisiert, und erst nach Nutzereingabe wird die Firmware aktualisiert.

Während des Lebenszyklus eines Feldgerätes kann der Fall auftreten, dass ein Modul desselben auszutauschen ist (beispielsweise weil das bisherige Modul defekt ist). Ein neu bestelltes Modul oder ein auf Lager bei dem Nutzer gehaltenes Modul weist in der Regel, insbesondere wenn es zu einem anderen Zeitpunkt hergestellt wurde, eine andere Firmware-Version und gegebenenfalls auch eine abgewandelte Ausbildung der Hardware auf. Wird solch ein Modul in das Feldgerät eingebaut, so besteht grundsätzlich die Problematik, dass die Firmware desselben in der Regel nicht kompatibel mit den Firmwares der weiteren Module des Feldgerätes ist (fehlende interne Kompatibilität) und/oder dass die Gesamt-Software des Feldgerätes aufgrund des Austauschs derart abgewandelt wird, dass mit den bisher verwendeten Informationen zur Geräteintegration keine externe Kompatibilität mehr gegeben ist. Insbesondere dann, wenn das betreffende Modul aufgrund eines Ausfalls schnell ausgetauscht werden muss, können diese Probleme der fehlenden internen und/oder externen Kompatibilität zum Teil nicht behoben werden. Insbesondere ist oftmals zu solch einem Austausch-Zeitpunkt kein ausreichend geschultes Fachpersonal verfügbar, das entsprechende Anpassungen durchführen kann. Dementsprechend kann dies zu einem Ausfall der Anlage führen.

Dieses Problem kann zum Teil dadurch behoben werden, dass der Nutzer bei Ausfall eines Moduls bei dem Hersteller ein neues Modul anfordert, das die gleiche Firmware-Version wie das bisher in dem Feldgerät eingebaute Modul aufweist. Dies kann jedoch zu einem längeren Ausfall des betreffenden Feldgerätes führen und ist herstellerseitig mit einem erhöhten Aufwand verbunden. Weiterhin kann diesem Problem auch dadurch entgegengewirkt werden, dass herstellerseitig die Firmware-Versionen der verschiedenen Module eines Feldgerätes jeweils derart ausgebildet werden, dass zumindest für die wesentlichen Grundfunktionen sowohl eine interne als auch eine externe Kompatibilität bei den verschiedenen, möglichen Firmware-Versionenkombinationen der einzelnen Module des Feldgerätes gegeben ist. Je höher die Anzahl der möglichen Firmware-Versionen für die einzelnen Module ist und je höher die Anzahl der Module innerhalb eines Feldgerätes ist, desto höher ist der herstellerseitige Aufwand, um solch eine interne als auch externe Kompatibilität für die verschiedenen, möglichen Firmware-Versionenkombinationen bereitzustellen.

Dementsprechend besteht die Aufgabe der vorliegenden Erfindung darin, ein Feldgerät, das mindestens zwei Module aufweist, die jeweils in dem Feldgerät austauschbar sind und die jeweils eine Hardware und eine, der Hardware zugeordnete Firmware aufweisen, sowie ein entsprechendes Verfahren bereitzustellen, durch das über die Lebensdauer des Feldgerätes hinweg auch bei Austausch eines oder mehrerer Module desselben eine Firmware-Kompatibilität der Firmwares der einzelnen Module erhaltbar ist.

Die Aufgabe wird durch ein Feldgerät gemäß Anspruch 1 sowie durch ein Verfahren gemäß Anspruch 12 gelöst. Vorteilhafte Weiterbildungen der Erfindung sind in den Unteransprüchen angegeben.

Das erfindungsgemäße Feldgerät, das insbesondere durch einen Sensor und/oder Aktor gebildet wird, weist mindestens einen Speicher und mindestens zwei Module, die jeweils in dem Feldgerät austauschbar sind und die jeweils eine Hardware und eine, der Hardware zugeordnete Firmware aufweisen, auf. Dabei sind in dem mindestens einen Speicher Firmware-Versioneninformationen einer kompatiblen Firmware-Versionenkombination der Module des Feldgerätes gespeichert oder sie sind darin bei einer erstmaligen Inbetriebnahme des Feldgerätes speicherbar. Ferner ist das Feldgerät derart ausgebildet, dass automatisiert ein Vergleich bei mindestens einem Modul des Feldgerätes (insbesondere bei sämtlichen Modulen des Feldgerätes) von dessen Firmware-Version mit den, in dem Speicher hinterlegten Firmware-Versioneninformationen durchführbar ist und dass das (jeweilige) Modul automatisiert auf die Firmware-Version gemäß den Firmware-Versioneninformationen umstellbar ist, falls der Vergleich eine Abweichung der Firmware-Version des Moduls von der, zu dem entsprechenden Modul gespeicherten Firmware-Version der Firmware-Versioneninformationen ergibt.

Dementsprechend wird durch die erfindungsgemäße Ausbildung des Feldgerätes sichergestellt, dass darin zumindest nach dessen erstmaliger Inbetriebnahme Firmware-Versioneninformationen einer kompatiblen Firmware-Versionenkombination hinterlegt sind und nach Austausch eines Moduls automatisiert das neu eingetauschte Modul mit der Firmware-Version gemäß den Firmware-Versioneninformationen betreibbar ist. Auf diese Weise werden sämtliche Module des Feldgerätes jeweils mit einer, der kompatiblen Firmware-Versionenkombination entsprechenden Firmware-Version betrieben, so dass insgesamt die kompatible Firmware-Versionenkombination erhalten wird. Im Falle eines Austausches eines Moduls des Feldgerätes entsteht folglich weder für den Nutzer noch für den Hersteller ein zusätzlicher Aufwand, um auf dem Modul die jeweils korrekte Firmware-Version vorzusehen. Weiterhin ist nicht erforderlich, dass nach dem Austausch eines Moduls geänderte Informationen zur Geräteintegration in einem Dritt-Gerät (beispielsweise in einem Bedienwerkzeug oder einem Engineering-Werkzeug) vorgesehen werden müssen. Dementsprechend können der erforderliche Aufwand sowie das Risiko eines, aufgrund des Austauschs eines Moduls bedingten Fehlers reduziert werden. Durch die erfindungsgemäße Ausbildung des Feldgerätes kann folglich über die Lebensdauer desselben hinweg die interne als auch die externe Kompatibilität sichergestellt werden.

Dabei können bei Auslieferung des Feldgerätes die Firmware-Versioneninformationen entsprechend einer Ausgangs-Firmware-Versionenkombination (wie sie bei der Auslieferung vorliegt) in dem mindestens einen Speicher gespeichert sein oder darin bei einer erstmaligen Inbetriebnahme des Feldgerätes entsprechend der Ausgangs-Firmware-Versionenkombination gespeichert werden. Eine Variante ist dabei, dass die Firmware-Versioneninformationen bereits bei Auslieferung des betreffenden Feldgerätes in dem mindestens einen Speicher gespeichert sind. Eine alternative, mögliche Variante ist, dass das Feldgerät derart ausgebildet ist, dass die Firmware-Versioneninformationen bei der erstmaligen Inbetriebnahme des Feldgerätes (nach dessen Auslieferung) automatisiert entsprechend der, in dem Feldgerät vorliegenden Ausgangs-Firmware-Versionenkombination in dem Speicher gespeichert werden und ab diesem Zeitpunkt dann als dauerhafte Referenz dienen (außer es wird ein Upgrade (deutsch: Aufrüstung) durchgeführt, wie nachfolgend erläutert wird). Dementsprechend kann der mindestens eine Speicher bei Auslieferung zunächst auch keine Firmware-Versioneninformationen aufweisen. Weiterhin können herstellerseitig auch weitere Firmware-Versioneninformationen von einer oder mehreren weiteren, kompatiblen Firmware-Versionenkombination(en) bereitgestellt werden, die als "Upgrade" (deutsch: Aufrüstung) nachträglich durch den Nutzer in das Feldgerät ladbar sind. Auf diese Weise kann das Feldgerät nachträglich auf eine andere kompatible Firmware-Versionenkombination, insbesondere auf eine neuere, kompatible Firmware-Versionenkombination (Upgrade), umgestellt werden. Alternativ zu einem Upgrade ist in gleicher Weise auch eine Umstellung auf eine ältere, kompatible Firmware-Versionenkombination (Downgrade) möglich. Die Alternative eines Downgrades wird nicht jedesmal explizit erwähnt. Dabei ist der herstellerseitige Aufwand reduziert, da durch den Hersteller die interne Kompatibilität wie auch die externe Kompatibilität (durch Bereitstellung jeweils entsprechender Informationen zur Geräteintegration) nur für eine begrenzte Anzahl von kompatiblen Firmware-Versionenkombinationen sichergestellt werden muss. Bei sämtlichen Varianten ist insbesondere vorgesehen, dass immer genau eine kompatible Firmware-Versionenkombination maßgeblich ist, dass deren zugehörigen Firmware-Versioneninformationen (zumindest nach der erstmaligen Inbetriebnahme des Feldgerätes) in dem Speicher gespeichert sind und dass die kompatible Firmware-Versionenkombination eine Referenz in dem Feldgerät bildet, an welche die Firmware(s) von einzelnen oder mehreren Modulen im Falle einer Abweichung angepasst werden. Die Firmware-Versionenkombination, deren zugehörige Firmware-Versioneninformationen in dem Speicher gespeichert sind, bildet folglich eine Art Master, der bestimmt, mit welchen Firmwares die einzelnen Module des Feldgerätes betrieben werden. Dabei ist in den Firmware-Versioneninformationen insbesondere eindeutig bestimmt, mit welchen Firmware-Versionen die einzelnen Module zu betreiben sind, so dass sich die zugehörige, kompatible Firmware-Versionenkombination ergibt.

Mit "Feldgerät" wird insbesondere auf einen Sensor oder einen Aktor (z.B. ein Stellventil) Bezug genommen. Insbesondere Sensoren weisen häufig, wie unter Bezugnahme auf die Figuren erläutert wird, mehrere Module auf. Der Sensor kann beispielsweise durch ein Durchflussmessgerät gebildet werden. Alternativ kann der Sensor auch durch ein Druckmessgerät, ein Temperaturmessgerät, ein Füllstands-Messgerät, ein pH-Messgerät, etc., gebildet werden. Das Feldgerät kann als kompaktes Gerät (d.h. sämtliche Teile desselben sind an oder in einem Gehäuse ausgebildet) oder als dezentrales Gerät, bei dem zumindest zwei Teile separat voneinander ausgebildet sind und miteinander (drahtgebunden oder drahtlos) in Kommunikationsverbindung stehen. Ein Beispiel einer dezentralen Ausbildung ist, dass der Messaufnehmer eines Feldgerätes im Feld platziert ist, während zumindest ein Teil der Elektronik des Feldgerätes, die eine Verarbeitung, Auswertung und/oder Umformung des Messsignals vornimmt, getrennt von dem Feldgerät ausgebildet und angeordnet ist. Der getrennt ausgebildete und angeordnete Teil der Elektronik (z.B. ein Messumformer) kann beispielsweise in einer Warte, insbesondere in einem Schaltschrank, angeordnet sein. Unter einer "Austauschbarkeit" der Module wird verstanden, dass diese einzeln ausgebaut und durch ein neues Modul ersetzt werden können. Solch ein Austausch kann gegebenenfalls auch mehrere, durchzuführende Schritte, wie beispielsweise das Lösen von Schrauben, das Trennen und erneute Verbinden von Leitungen, etc. umfassen.

Gemäß einer Weiterbildung wird der mindestens eine Speicher, in dem die Firmware-Versioneninformationen gespeichert sind, durch genau einen Speicher gebildet. Dadurch sind die Firmware-Versioneninformationen zentral in dem Feldgerät verfügbar. Alternativ können sie aber auch in mehr als einem Speicher, d.h. dezentral, gespeichert sein. Der mindestens eine Speicher ist insbesondere dauerhaft in dem Feldgerät verfügbar. Die Firmware-Versioneninformationen können dabei auch, wie es in dem Fachgebiet bekannt ist, komprimiert auf dem Speicher gespeichert sein.

Als Firmware wird, wie in dem Fachgebiet üblich ist, eine eingebettete Software bezeichnet, die funktional mit der zugehörigen Hardware (des jeweiligen Moduls) verbunden ist. Insbesondere ist in den einzelnen Modulen die Hardware ohne die zugehörige Firmware nicht betreibbar und umgekehrt. Die kompatible Firmware-Versionenkombination ist eine Kombination von solchen Firmware-Versionen der verschiedenen Module des Feldgerätes, dass diese sowohl intern als auch extern (insbesondere durch Bereitstellung von zugehörigen Informationen zur Geräteintegration zu der daraus resultierenden Gesamt-Software) kompatibel sind. Die kompatible Firmware-Versionenkombination bildet insbesondere eine herstellerseitig autorisierte Firmware-Versionenkombination. Beispielsweise wird diese durch den Hersteller des Feldgerätes bereitgestellt (bereits bei dessen Auslieferung und/oder für einen nachträglichen Upgrade). Das Feldgerät ist insbesondere derart ausgebildet, dass das automatisierte Durchführen des Vergleichs und das automatisierte Umstellen des betreffenden Moduls auf die jeweilige Firmware-Version ohne Benutzer-Interaktion erfolgt. Auf diese Weise wird verhindert, dass aufgrund eines Eingriffs durch den Nutzer in dem Feldgerät eine andere als die kompatible Firmware-Versionenkombination vorliegt.

Grundsätzlich kann sowohl der Fall auftreten, dass das Modul, bei dem der Vergleich und gegebenenfalls eine Umstellung durchgeführt wird, zunächst eine neuere Firmware-Version als die Firmware-Version gemäß den Firmware-Versioneninformationen aufweist. Dieser Fall kann insbesondere dann auftreten, wenn in dem Feldgerät ein altes durch ein neues Modul ausgetauscht wird. Alternativ kann das Modul, bei welchem der Vergleich und gegebenenfalls eine Umstellung durchgeführt wird, zunächst auch eine ältere Firmware-Version als die Firmware-Version gemäß den Firmware-Versioneninformationen aufweisen.

Sofern in diesem Zusammenhang auf "mindestens einen" Bezug genommen wird, wird dabei jeweils auf genau einen sowie auch auf die Möglichkeit von mehreren Bezug genommen. Dieses Verständnis gilt auch dann, wenn dies nicht jedesmal explizit erwähnt wird (es sei denn, es wird "genau einer" genannt). Dieses Verständnis gilt insbesondere bei dem mindestens einen Speicher.

Gemäß einer Weiterbildung entspricht die kompatible Firmware-Versionenkombination einer Firmware-Versionenkombination, wie sie bei der Auslieferung des Feldgerätes vorliegt (Ausgangs-Firmware-Versionenkombination). Auf diese Weise wird sichergestellt, dass das Feldgerät über dessen Lebensdauer hinweg (sofern kein Upgrade durchgeführt wird) mit dieser kompatiblen Ausgangs-Firmware-Versionenkombination betrieben wird.

Das Feldgerät ist derart ausgebildet, dass nach einem Starten desselben der Vergleich bei sämtlichen Modulen des Feldgerätes automatisiert durchgeführt wird und gegebenenfalls automatisiert die Umstellung des/der entsprechenden Moduls/Module auf die Firmware-Version gemäß den Firmware-Versioneninformationen erfolgt. Mit "sämtlichen Modulen" wird auf die Module des Feldgerätes Bezug genommen, zu denen in den Firmware-Versioneninformationen Informationen über deren Firmware hinterlegt sind. Auf diese Weise wird sichergestellt, dass nach jedem Starten des Feldgerätes sämtliche Module mit der Firmware gemäß der kompatiblen Firmware-Versionenkombination betrieben werden. Da nach einem Austausch eines Moduls eines Feldgerätes das Feldgerät in der Regel neu gestartet wird, kann sichergestellt werden, dass gerade dann, wenn sich möglicherweise Änderungen ergeben haben, wieder sämtliche Module auf die kompatible Firmware-Versionenkombination eingestellt werden. Zusätzlich oder alternativ kann auch vorgesehen sein, dass in regelmäßigen Zeitabständen und/oder auf Initiative eines Nutzers der Vergleich und gegebenenfalls das Umstellen durchgeführt wird/werden.

Die Firmware-Versioneninformationen weisen die Firmwares der Module jeweils in der Firmware-Version der kompatiblen Firmware-Versionenkombination auf. Indem die Firmwares selbst in dem mindestens einen Speicher gespeichert sind, können diese bei Bedarf einfach in das betreffende Modul geladen werden. Gemäß einer Weiterbildung ist das Feldgerät derart ausgebildet, dass im Rahmen des automatisierten Umstellens eines Moduls auf die Firmware-Version gemäß den Firmware-Versioneninformationen die diesem Modul entsprechende Firmware aus den Firmware-Versioneninformationen in das Modul geladen wird und darin aktiviert wird. Insbesondere wird dabei die bisher in dem Modul vorgesehene Firmware überschrieben. Eine spezielle Ausbildung der einzelnen Module des Feldgerätes ist hierfür nicht erforderlich. Diese Weiterbildungen sind insbesondere im Hinblick auf die Durchführung eines Upgrade der Firmware-Versioneninformationen vorteilhaft. Denn damit können als Upgrade auch Firmwares mit neueren Firmware-Versionen (als die bisher auf den Modulen vorgesehenen Firmware-Versionen) in dem Speicher gespeichert werden und die Module des Feldgerätes können so auf neuere Firmware-Versionen umgestellt werden. Dabei können die Firmware-Versioneninformationen insbesondere bei dieser Weiterbildung komprimiert auf dem mindestens einen Speicher gespeichert werden.

Gemäß einer Weiterbildung ist mindestens ein Modul derart ausgebildet, dass es in verschiedenen Firmware-Versionen betreibbar ist und dass in Abhängigkeit von dem Ergebnis des Vergleichs in dem Modul die Firmware-Version gemäß den Firmware-Versioneninformationen aktivierbar ist. Insbesondere sind sämtliche Module des Feldgerätes, zu denen in den Firmware-Versioneninformationen Informationen über deren Firmware hinterlegt sind, derart ausgebildet. Gemäß einer Weiterbildung ist ferner vorgesehen, dass die Firmware-Versioneninformationen Informationen über die Firmware-Versionen der kompatiblen Firmware-Versionenkombination, nicht aber die Firmwares selbst der kompatiblen Firmware-Versionenkombination, aufweisen. Dementsprechend bilden die Firmware-Versioneninformationen eine Art Informationsmatrix bezüglich der, in den einzelnen Modulen zu verwendenden Firmware-Versionen. Bei dieser Weiterbildung benötigen die Firmware-Versioneninformationen nur relativ wenig Speicherplatz. Demgegenüber sind die einzelnen Module vergleichsweise umfangreich ausgebildet, da auf diesen jeweils mehrere Firmware-Versionen vorzusehen sind, von denen dann jeweils eine aktiviert wird. Im Hinblick auf die Durchführung eines Upgrades ist bei diesen Weiterbildungen problematisch, dass auf den einzelnen Modulen in der Regel nur die Firmware-Versionen vorgesehen sind, die bereits zum Zeitpunkt von deren jeweiliger Auslieferung existierten.

Das Feldgerät weist eine Prozessoreinheit auf, durch die der automatisierte Vergleich und das automatisierte Umstellen jeweils in Bezug auf sämtliche Module des Feldgerätes durchführbar ist. Auf diese Weise wird die Durchführung des Vergleichs und gegebenenfalls des Umstellens zentral gesteuert. Eine spezielle Ausbildung der Module ist bei dieser Weiterbildung nicht erforderlich. Die Prozessoreinheit kann insbesondere durch eine Zentraleinheit (CPU: englisch: central processing unit) des Feldgerätes gebildet werden. Sie kann alternativ auch integral in einem anderen Modul des Feldgerätes, wie beispielsweise in einem Messverstärkermodul, vorgesehen sein. Alternativ kann aber auch vorgesehen sein, dass die einzelnen Module derart ausgebildet sind, dass diese eigenständig den Vergleich durchführen und gegebenenfalls die Umstellung vornehmen. Gegebenenfalls können sie die Durchführung dieser Schritte auch selbst triggern (deutsch: zeitlich auslösen).

Gemäß einer Weiterbildung ist der mindestens eine Speicher in dem Feldgerät und unabhängig von den Modulen des Feldgerätes ausgebildet. Auf diese Weise wird sichergestellt, dass der Speicher von dem Austausch eines oder mehrerer Module des Feldgerätes unbetroffen ist. Der mindestens eine Speicher kann beispielsweise durch (mindestens einen) ROM (engl.: read-only memory; deutsch: Festwertspeicher) gebildet werden. Insbesondere ist genau ein Speicher zentral für sämtliche Module des Feldgerätes zur Speicherung der Firmware-Versioneninformationen vorgesehen.

Gemäß einer Weiterbildung weist das Feldgerät mindestens eines der nachfolgenden Module auf, wobei von den einzelnen, genannten Modulen auch jeweils mehr als eines vorgesehen sein können:
a) eine Zentraleinheit;
b) ein Messverstärkermodul;
c) ein Sensormodul;
d) ein Benutzerschnittstellenmodul; und/oder
e) ein Kommunikationsschnittstellenmodul.

Alternativ und/oder zusätzlich können auch noch andere Module vorgesehen sein. Die konkrete Ausgestaltung hängt von dem Aufbau und den Funktionen des Feldgerätes ab. Ferner ist nicht zwingend erforderlich, dass die Zentraleinheit als separates Modul ausgebildet ist. Insbesondere können auch zwei oder mehrere der oberhalb genannten Module integral als ein Modul ausgebildet sein. Beispielsweise kann/können das Messverstärkermodul und/oder das Kommunikationsschnittstellenmodul zusammen mit der Zentraleinheit integral ein Modul bilden.

Gemäß einer Weiterbildung ist das Feldgerät derart ausgebildet, dass in dem mindestens einen Speicher mindestens eine der nachfolgenden Informationen speicherbar und/oder aus dem mindestens einen Speicher auslesbar ist/sind:
f) Konfigurationsparameter von mindestens einem Modul des Feldgerätes; und/oder
g) Informationen zur Geräteintegration des Feldgerätes.

Insbesondere sind diese Informationen in dem mindestens einen Speicher gespeichert. Durch die Speicherung der Konfigurationsparameter können nach Austausch eines Moduls (oder auch nach einem Zurücksetzen eines Moduls) die zugehörigen Konfigurationsparameter auf einfache Weise aus dem Speicher abgerufen werden und in das Modul geladen werden. Auf diese Weise ist das Modul direkt in der richtigen Konfiguration betreibbar, ohne dass der Nutzer hierzu entsprechende Konfigurationsparameter einstellen muss. Insbesondere können die Schritte des Abrufens der Konfigurationsparameter aus dem Speicher und das Laden derselben in das betreffende Modul automatisiert durchgeführt werden. Vorzugsweise sind in dem Speicher die Konfigurationsparameter zu sämtlichen Modulen des Feldgerätes, die Konfigurationsparameter aufweisen, gespeichert. Indem die Informationen zur Geräteintegration des Feldgerätes in dem Speicher gespeichert sind, sind diese zentral in dem Feldgerät verfügbar. Hierdurch werden Zuordnungsprobleme, welche Informationen zur Geräteintegration für das betreffende Feldgerät zu verwenden sind, vermieden. Falls ein Upgrade durchgeführt wird, können zusammen mit den Firmware-Versioneninformationen auch die zugehörigen Informationen zur Geräteintegration in dem Speicher gespeichert werden. Die Informationen zur Geräteintegration können so auf einfache Weise (gegebenenfalls auch automatisiert) an ein Dritt-Gerät (beispielsweise ein Bedienwerkzeug oder ein Engineering-Werkzeug), durch welches das Feldgerät beispielsweise bedient wird, übermittelt werden.

Gemäß einer Weiterbildung weisen die Informationen zur Geräteintegration des Feldgerätes, insbesondere eine Gerätebeschreibung und/oder einen DTM (DTM: Device Type Manager; deutsch: Gerätetyp-Manager) des Feldgerätes auf. Die Informationen zur Geräteintegration (englische Bezeichnung: means for device integration) eines Feldgerätes dienen dazu, einem Dritt-Gerät (beispielsweise einem Bedienwerkzeug oder einem Engineering-Werkzeug) die in Bezug auf eine Bedienung relevanten Eigenschaften des Feldgerätes bekannt zu machen. In der Regel umfassen die Informationen zur Geräteintegration im Wesentlichen Informationen über die in dem Feldgerät implementierten Funktionen und in dem Feldgerät enthaltenen Daten. Insbesondere umfassen sie in der Regel die von dem betreffenden Feldgerät gelieferten Eingangs- und Ausgangssignale, Informationen bezüglich der Kommunikation des Feldgerätes über einen Feldbus, in dem Feldgerät vorgesehene Parameter, von dem Feldgerät gelieferte Status- und Diagnoseinformationen, Daten und Regeln für Abarbeitungsvorgänge (z.B. Konfigurierung, Kalibrierung) und/oder Informationen über Anwenderdialoge, etc.. Um verschiedene Feldgeräte, insbesondere Feldgeräte von verschiedenen Herstellern, über ein- und dasselbe Bedienwerkzeug bedienen zu können, wurden Standards in Bezug auf diese Informationen zur Geräteintegration geschaffen.

Zum Einen umfassen Informationen zur Geräteintegration eines Feldgerätes beispielsweise eine Gerätebeschreibung (DD) (engl.: "Device Description") des Feldgerätes. Die Gerätebeschreibung wird in der Regel in textbasierter Form erstellt (z.B. im ASCII-Textformat). Hierzu werden je nach verwendetem Feldbus-System verschiedene Gerätebeschreibungssprachen verwendet, wie beispielsweise die HART^{®} Device Description Language, Foundation^{®} Fieldbus Device Description Language, Electronic Device Description Language (EDDL), Field Device Configuration Markup Language, GSD/Profibus (GSD: General Station Description). Die in der Gerätebeschreibung bereitgestellten Informationen werden in der Regel durch einen Interpreter interpretiert bzw. übersetzt und an das Bedienwerkzeug, das eine Rahmenapplikation für die Gerätebeschreibung bildet, bereitgestellt. Ferner umfassen Informationen zur Geräteintegration eines Feldgerätes beispielsweise einen Gerätetreiber des Feldgerätes, insbesondere einen "Device Type Manager" (DTM) (deutsch: Gerätetyp-Manager). Ein Gerätetreiber, insbesondere ein "Device Type Manager", ist dabei eine gerätespezifische Software, die Daten und Funktionen des Feldgerätes kapselt und graphische Bedienelemente bereitstellt. Solch ein Gerätetreiber benötigt zur Ausführung eine entsprechende Rahmenapplikation, beispielsweise benötigt ein "Device Type Manager" zur Ausführung eine FDT-Rahmenapplikation (FDT: Field Device Tool; deutsch: Feldgerätwerkzeug). Ein Bedienprogramm, das solch eine FDT-Rahmenapplikation bildet, ist beispielsweise "FieldCare^{®}" von Endress + Hauser.

Die vorliegende Erfindung betrifft ferner ein Verfahren zum Langzeit-Erhalten der Firmware-Kompatibilität eines Feldgerätes gemäß Anspruch 12.

Bei dem erfindungsgemäßen Verfahren werden im Wesentlichen die, in Bezug auf das erfindungsgemäße Feldgerät erläuterten Vorteile erzielt. Ferner sind die oberhalb erläuterten Weiterbildungen und Varianten in entsprechender Weise realisierbar. Insbesondere können die Schritte des Automatisierten Durchführens eines Vergleichs (vgl. Schritt B)) und des Automatisierten Umstellens (vgl. Schritt C)) auch mehrmals, beispielsweise jedesmal nach dem Starten des Feldgerätes, oder regelmäßig, beispielsweise in regelmäßigen Zeitabständen, durchgeführt werden.

Ferner kann auch das Speichern der Firmware-Versioneninformationen (vgl. Schritt A)) mehrmals während der Lebensdauer des Feldgerätes erfolgen (beispielsweise falls später ein Upgrade durchgeführt wird).

Gemäß einer Weiterbildung wird der Schritt des Speicherns durch den Hersteller des Feldgerätes oder bei einer erstmaligen Inbetriebnahme des Feldgerätes durchgeführt. Insbesondere werden dabei Firmware-Versioneninformationen einer ursprünglichen Firmware-Versionenkombination (Ausgangs-Firmware-Versionenkombination), wie sie bei der Auslieferung des Feldgerätes vorliegt, gespeichert. In Kombination mit der Durchführung der Schritte des Automatisierten Durchführens eines Vergleichs (vgl. Schritt B)) und des Automatisierten Umstellens (vgl. Schritt C)) wird so dauerhaft sichergestellt, dass das Feldgerät in der Ausgangs-Firmware-Versionenkombination betrieben wird.

Gemäß einer Weiterbildung wird der Schritt des Speicherns nach einer erstmaligen Inbetriebnahme des Feldgerätes durchgeführt. Dabei werden Firmware-Versioneninformationen einer kompatiblen Firmware-Versionenkombination, die sich von der ursprünglichen Firmware-Versionenkombination (Ausgangs-Firmware-Versionenkombination) des Feldgerätes unterscheidet, gespeichert. Auf diese Weise kann insbesondere nachträglich ein Upgrade der Firmwares der Module des Feldgerätes und damit ein Upgrade der Gesamt-Software des Feldgerätes durchgeführt werden. Die Firmware-Versioneninformationen für solch einen Upgrade können insbesondere herstellerseitig an einen Nutzer bereitgestellt werden. Der Nutzer kann diese Firmware-Versioneninformationen beispielsweise von einer Hersteller-Webseite herunterladen. Dabei kann vorgesehen sein, dass das Feldgerät (mindestens) zwei Speicher bzw. Speicherbereiche aufweist, die jeweils einzeln aktivierbar sind. Dabei sind in einem ersten Speicher (bzw. Speicherbereich) die bisher maßgeblichen Firmware-Versioneninformationen gespeichert, während in einem zweiten Speicher (bzw. Speicherbereich) die neuen Firmware-Versioneninformationen ladbar sind. Nach dem Laden der neuen Firmware-Versioneninformationen kann dann der zweite Speicher (bzw. Speicherbereich) aktiviert und der erste Speicher (bzw. Speicherbereich) deaktiviert werden. So kann eine Umstellung auf neue Firmware-Versioneninformationen erfolgen, ohne dass dies mit einem (längeren) Ausfall des Feldgerätes verbunden ist.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:
- Fig. 1A:: eine schematische Darstellung eines Feldgerätes gemäß einer ersten Ausführungsform der Erfindung und eines Bediengerätes;
- Fig. 1B:: das Feldgerät und das Bediengerät der Fig. 1A, wobei das erfindungsgemäße Verfahren anhand des Austauschs eines Moduls des Feldgerätes veranschaulicht wird;
- Fig. 2A:: eine schematische Darstellung eines Feldgerätes gemäß einer zweiten Ausführungsform der Erfindung und eines Bediengerätes; und
- Fig. 2B:: das Feldgerät und das Bediengerät der Fig. 2A, wobei das erfindungsgemäße Verfahren anhand des Austauschs eines Moduls des Feldgerätes veranschaulicht wird.

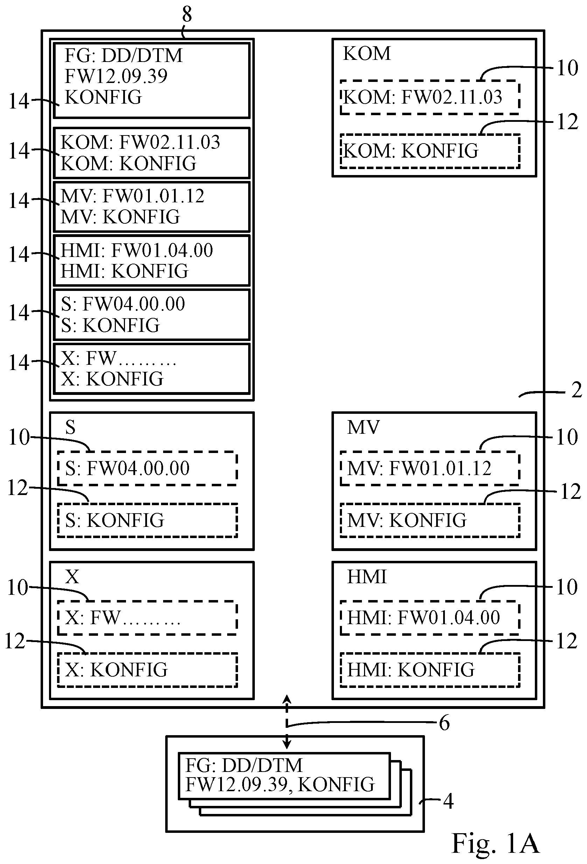

In Fig. 1A ist ein Feldgerät 2 dargestellt, das einen Sensor, vorliegend ein Durchflussmessgerät, bildet. Das Feldgerät 2 steht mit einem Bediengerät 4, auf dem ein Bedienwerkzeug implementiert ist, über ein Datenübertragungssystem 6 in Kommunikationsverbindung. Das Datenübertragungssystem 6 wird bei der dargestellten Ausführungsform durch einen Feldbus 6 (vorliegend HART^{®}) gebildet. Das Feldgerät 2 weist einen, in dem Feldgerät 2 vorgesehen, zentralen Speicher 8 auf. Ferner weist das Feldgerät 2 ein Messverstärkermodul MV, ein Sensormodul S, ein Benutzerschnittstellenmodul HMI und ein Kommunikationsschnittstellenmodul KOM auf. Das Sensormodul S umfasst die Sensoreinheit des Feldgerätes 2 und ist derart ausgebildet, dass durch dieses ein Messsignal, welches charakteristisch für die zu erfassende Messgröße ist, bereitstellbar ist. Das Messverstärkermodul MV ist derart ausgebildet, dass durch dieses eine Bearbeitung des von dem Sensormodul S bereitgestellten Messsignals, wie beispielsweise eine Verstärkung, eine Umwandlung, eine Glättung, etc., durchführbar ist. Das Benutzerschnittstellenmodul HMI weist bei der vorliegenden Ausführungsform eine Anzeige- und Bedieneinheit und eine zugehörige Elektronik auf. Je nach Ausbildung des Feldgerätes 2 kann es aber auch nur eine Bedieneinheit aufweisen. Das Kommunikationsschnittstellenmodul ist derart ausgebildet, dass durch dieses eine Kommunikation des Feldgerätes 2 über das jeweilige Datenübertragungssystem (vorliegend: Feldbus) 6 durchführbar ist. Daneben kann das Feldgerät auch noch weitere Module aufweisen, wie in Fig. 1A schematisch durch das weitere Modul X dargestellt ist.

Jedes Modul MV, S, HMI, KOM und X weist jeweils eine Hardware und eine, der Hardware zugeordnete Firmware auf. Die Firmware-Version der jeweiligen Firmware wird jeweils durch eine Firmware-Versionennummer angegeben. Diese Firmware-Versionennummer ist für jedes Modul MV, S, HMI, KOM und X jeweils in der lang gestrichelten Box 10 angegeben. Insbesondere weist das Messverstärkermodul MV die Firmware-Version FW01.01.12, das Sensormodul S die Firmware-Version FW04.00.00, das Benutzerschnittstellenmodul HMI die Firmware-Version FW01.04.00 und das Kommunikationsschnittstellenmodul KOM die Firmware-Version FW02.11.03 auf. Weiterhin ist jedes Modul entsprechend seiner auszuführenden Funktionalität konfiguriert, was durch entsprechende Einstellungen der Konfigurationsparameter des jeweiligen Moduls erfolgt. Die spezifischen Konfigurationsparameter der einzelnen Module sind in Fig. 1A für jedes Modul MV, S, HMI, KOM und X jeweils durch die kurz gestrichelte Box 12 mit der Bezeichnung "KONFIG" dargestellt.

Die Firmwares der einzelnen Module MV, S, HMI, KOM und X liegen jeweils in einer kompatiblen Firmware-Versionenkombination vor. Insbesondere ist eine interne Kompatibilität wie auch eine externe Kompatibilität gegeben. Bei der vorliegenden, kompatiblen Firmware-Versionenkombination kann es sich um eine kompatible Ausgangs-Firmware-Versionenkombination handeln, wie sie herstellerseitig bei Auslieferung des Feldgerätes 2 vorgesehen wurde. Wurde durch den Nutzer des Feldgerätes 2 bereits ein Upgrade der Firmware-Versioneninformationen durchgeführt, kann es sich auch um eine, von der Ausgangs-Firmware-Versionenkombination abweichende, herstellerseitig bereitgestellte, kompatible Firmware-Versionenkombination handeln.

In dem zentralen Speicher 8, der unabhängig von den Modulen MV, S, HMI, KOM und X des Feldgerätes 2 ausgebildet ist, sind Firmware-Versioneninformationen der kompatiblen Firmware-Versionenkombination gespeichert. Die Firmware-Versioneninformationen weisen für jedes Modul MV, S, HMI, KOM und X die Firmwares jeweils in der Firmware-Version der kompatiblen Firmware-Versionenkombination auf. Dies ist in Fig. 1A schematisch durch die einzelnen, den jeweiligen Modulen (sowie dem Bediengerät 4) zugeordneten Blöcke 14 innerhalb des Speichers 8 dargestellt, in denen jeweils die Firmware-Versionennummern der verschiedenen Module MV, S, HMI, KOM und X angegeben sind. Ferner sind in dem Speicher 8 jeweils die Konfigurationsparameter (bzw. deren Einstellungen) der verschiedenen Module MV, S, HMI, KOM und X gespeichert, was in Fig. 1A durch Angabe von "KONFIG" in den einzelnen Blöcken 14 dargestellt ist.

Bei der vorliegenden Ausführungsform wird aus den Firmwares der einzelnen Module des Feldgerätes 2 die Gesamt-Software des Feldgerätes 2 gebildet. Diese Gesamt-Software ist, wie oberhalb erläutert wird, maßgeblich für die Interoperabilität des Feldgerätes 2 (als Ganzes) mit Dritt-Geräten, vorliegend mit dem Bediengerät 4. Der Gesamt-Software des Feldgerätes 2 wurde die Versionennummer FW12.09.39 zugeordnet. Diese Versionennummer ist in der Regel an dem Feldgerät derart angebracht, dass sie von einem Nutzer leicht abgelesen kann. Anhand dieser Versionennummer der Gesamt-Software kann dann der Nutzer die zugehörigen Informationen zur Geräteintegration, insbesondere die passende Gerätebeschreibung DD und/oder den passenden Gerätetreiber DTM, auswählen. Die passenden Informationen zur Geräteintegration benötigt das Bediengerät 4, um das Feldgerät 2 spezifisch bedienen zu können (vgl. "FG:DD/DTM FW 12.09.39" in Fig. 1A innerhalb des Bediengerätes 4). Bei der dargestellten Ausführungsform sind die Informationen zur Geräteintegration des Feldgerätes 2, die entsprechend der, in dem Feldgerät 2 vorliegenden Gesamt-Software ausgebildet sind, in dem Speicher 8 gespeichert. Dies ist in Fig. 1A schematisch durch den Block 14 mit der Aufschrift "FG: DD/DTM FW12.09.39" dargestellt. Ferner sind die für die Bedienung des Feldgerätes 2 relevanten Konfigurationsparameter, die in dem Bediengerät 4 einzustellen sind, ebenfalls in dem Speicher 8 gespeichert (vgl. "KONFIG" in demselben Block 14 sowie "KONFIG" innerhalb des Bediengerätes 4). Auf diese Weise müssen die, zu dem Feldgerät 2 zugehörigen Informationen zur Geräteintegration sowie die zugehörigen Einstellungen der Konfigurationsparameter nicht manuell durch einen Nutzer ausgewählt bzw. eingestellt werden. Das Bediengerät 4 kann sich diese automatisiert über den Feldbus 6 laden. Weiterhin ist im Falle der Durchführung eines Upgrade der Firmware-Versioneninformationen vorteilhaft, dass zusammen mit den neuen Firmware-Versioneninformationen auch die zugehörigen Informationen zur Geräteintegration sowie gegebenenfalls die zugehörigen Einstellungen der Konfigurationsparameter für das Bediengerät in den Speicher 8 geladen werden können. Auf diese Weise werden Fehler, die durch eine falsche Auswahl durch den Nutzer bedingt sind, vermieden.

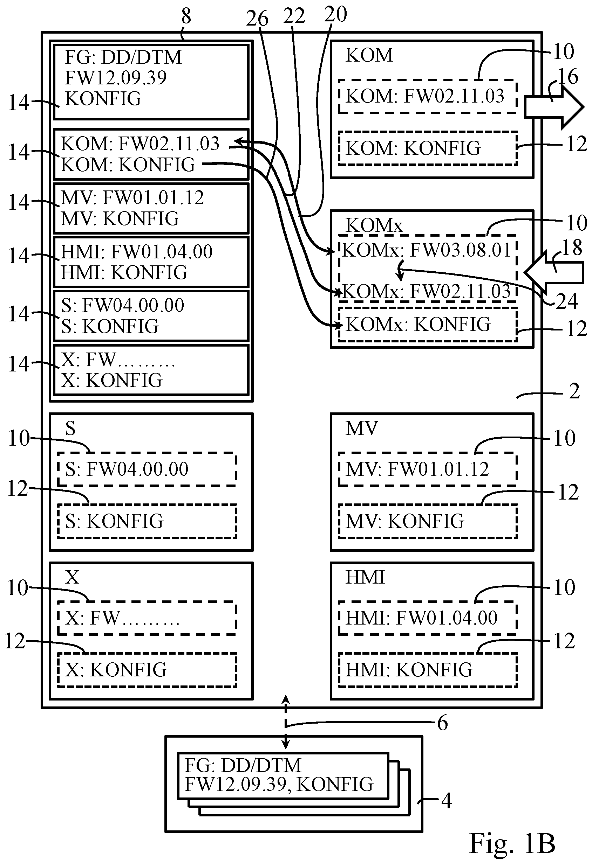

Nachfolgend wird unter Bezugnahme auf Fig. 1B der Fall erläutert, dass ein Modul (beispielsweise aufgrund eines Defekts desselben) des in Fig. 1A dargestellten Feldgerätes durch ein neues Modul ausgetauscht wird. Vorliegend wird das Kommunikationsschnittstellenmodul KOM durch ein neues Kommunikationsschnittstellenmodul KOMx ausgetauscht (vgl. Pfeile 16 und 18 in Fig. 1B). Für die Durchführung dieses Austausches wird das Feldgerät 2 vorübergehend ausgeschaltet. Die Firmware des neu eingetauschten Moduls KOMx liegt in der Firmware-Version FW03.08.01 vor, während die Firmware des bisherigen Moduls KOM in der Firmware-Version FW02.11.03 vorlag. Dementsprechend ergibt sich eine Abweichung von der kompatiblen Firmware-Versionenkombination, zu der die zugehörigen Firmware-Versioneninformationen in dem Speicher 8 gespeichert sind. Nach dem Austausch des Moduls KOM durch KOMx wird das Feldgerät 2 wieder gestartet. Nach dem Starten des Feldgerätes 2 wird bei sämtlichen Modulen MV, S, HMI, KOMx und X des Feldgerätes 2 ein Vergleich von deren jeweiliger Firmware-Version mit den, in dem Speicher 8 hinterlegten Firmware-Versioneninformationen automatisiert durchgeführt. Dieser Vergleich wird für alle Module MV, S, HMI, KOMx und X zentral durch eine (nicht dargestellte) Prozessoreinheit durchgeführt, die bei der vorliegenden Ausführungsform in das Messverstärkermodul MV integriert ist. Die Durchführung des Vergleichs ist in Fig. 1B in Bezug auf das Modul KOMx schematisch durch den Doppelpfeil 20 dargestellt. In dem vorliegenden Fall ergibt der Vergleich, wie oberhalb erläutert wird, eine Abweichung der Firmware-Version des Moduls KOMx (vorliegend: FW03.08.01) von der, zu dem entsprechenden Modul KOM gespeicherten Firmware-Version (vorliegend: FW02.11.03) der Firmware-Versioneninformationen. Dementsprechend wird das Modul KOMx automatisiert auf die Firmware-Version gemäß den Firmware-Versioneninformationen (vorliegend: FW02.11.03) umgestellt. Bei der dargestellten Ausführungsform erfolgt dies dadurch, dass die dem Modul KOMx entsprechende Firmware aus den, in dem Speicher 8 gespeicherten Firmware-Versioneninformationen in das Modul KOMx geladen wird (die bisher auf dem Modul KOMx vorgesehen Firmware wird dabei überschrieben) und darin aktiviert wird (vgl. Pfeile 22, 24 in Fig. 1B). Anschließend werden die, zu dem Modul KOMx zugehörigen Konfigurationsparameter "KONFIG" aus dem Speicher 8 in das Modul KOMx geladen (vgl. Pfeil 26 in Fig. 1B). Die Schritte des Umstellens und des Ladens der Konfigurationsparameter werden wiederum durch die Prozessoreinheit, die in das Messverstärkermodul MV integriert ist, durchgeführt. Durch die Schritte des Umstellens und des Ladens wird erzielt, dass das Modul KOMx mit der Firmware-Version entsprechend der kompatiblen Firmware-Versionenkombination und mit den Konfigurationseinstellungen des bisher in dem Feldgerät vorgesehenen, entsprechenden Moduls KOM betrieben wird. Die Schritte der Durchführung des Vergleichs, des Umstellens und des Ladens werden dabei automatisiert ohne Interaktion durch einen Nutzer durchgeführt.

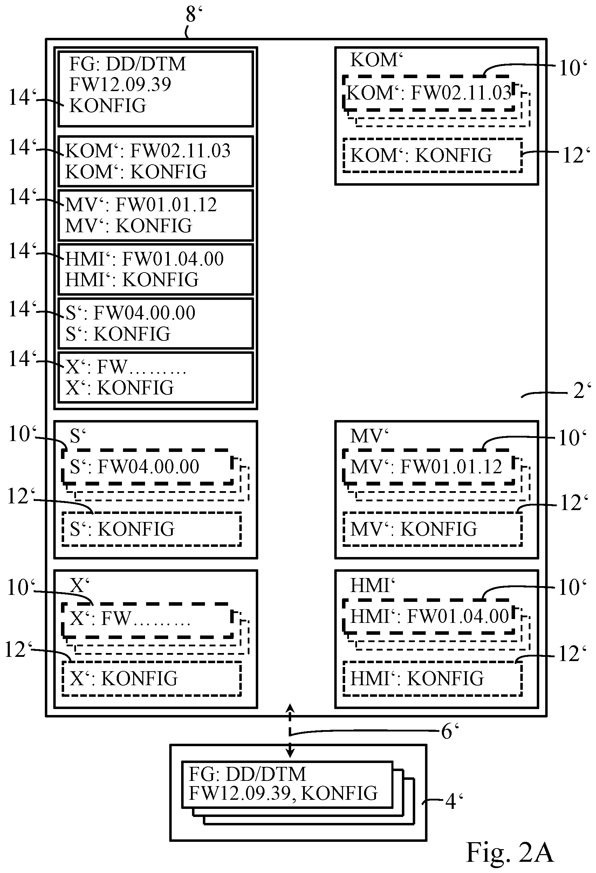

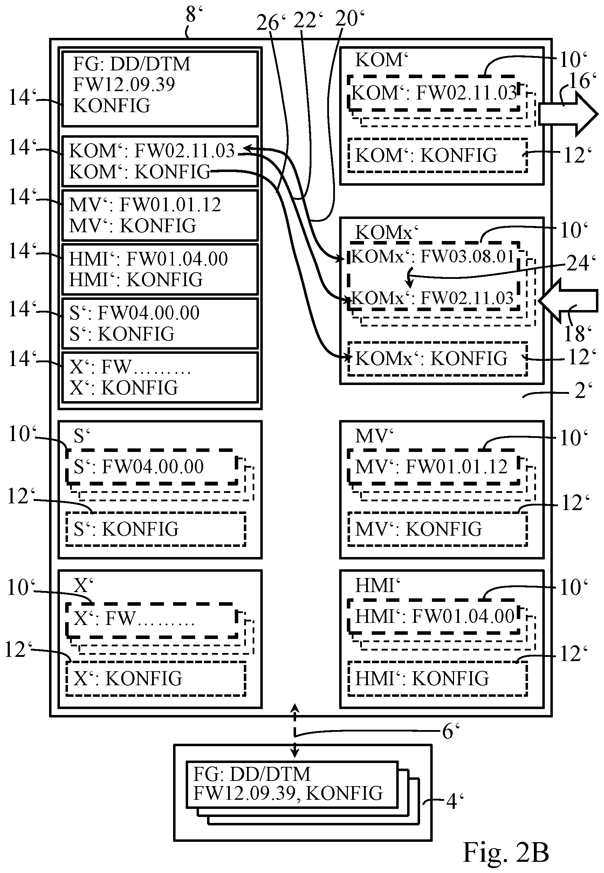

Nachfolgend wird unter Bezugnahme auf die Fig. 2A und 2B eine zweite Ausführungsform der vorliegenden Erfindung erläutert. Dabei werden vorwiegend die Unterschiede gegenüber der ersten Ausführungsform erläutert. Für gleiche oder entsprechende Bauteile werden wiederum die gleichen Bezugszeichen verwendet, wobei diese jeweils mit einem zusätzlichen Strich versehen sind. Fig. 2A entspricht abgesehen von den nachfolgend erläuterten Unterschieden der Darstellung in Fig. 1A. Im Unterschied zu der ersten Ausführungsform sind die einzelnen Module MV`, S`, HMI', KOM' und X' jeweils derart ausgebildet, dass sie jeweils in verschiedenen Firmware-Versionen betreibbar sind. Dies ist in Fig. 2A schematisch dadurch dargestellt, dass jeweils mehrere, lang gestrichelte Boxen 10' vorgesehen sind, wobei die jeweils aktivierte Firmware-Version in Fettdruck (der gestrichelten Box) hervorgehoben ist. Beispielsweise können in jedem Modul MV`, S`, HMI', KOM' und X' sämtliche Firmware-Versionen vorgesehen werden, die bis zu dessen Auslieferungsdatum erstellt wurden.

Die Firmwares der einzelnen Module MV', S`, HMI', KOM` und X' liegen wiederum in einer kompatiblen Firmware-Versionenkombination vor. In dem zentralen Speicher 8', der unabhängig von den Modulen MV', S`, HMI', KOM` und X' des Feldgerätes 2 ausgebildet ist, sind Firmware-Versioneninformationen der kompatiblen Firmware-Versionenkombination gespeichert. Die Firmware-Versioneninformationen weisen bei dieser zweiten Ausführungsform Informationen über die Firmware-Versionen der kompatiblen Firmware-Versionenkombination, nicht aber die Firmwares selbst der kompatiblen Firmware-Versionenkombination, auf. Dementsprechend bilden die Firmware-Versioneninformationen eine Art Informationsmatrix bezüglich der, in den einzelnen Modulen MV', S`, HMI', KOM` und X' zu verwendenden Firmware-Versionen. Die Speicherung der Firmware-Versioneninformationen in dem Speicher 8 ist in Fig. 2A schematisch durch die einzelnen, den jeweiligen Modulen (sowie dem Bediengerät 4) zugeordneten Blöcke 14 innerhalb des Speichers 8 dargestellt, in denen jeweils die Firmware-Versionennummern der verschiedenen Module MV', S', HMI' und KOM` angegeben sind. Ferner sind in dem Speicher 8 wiederum die Konfigurationsparameter (bzw. deren Einstellungen) der verschiedenen Module MV', S`, HMI', KOM` und X' gespeichert, was in Fig. 2A durch Angabe von "KONFIG" in den einzelnen Blöcken 14 dargestellt ist.

Nachfolgend wird unter Bezugnahme auf Fig. 2B wiederum der Fall erläutert, dass ein Modul (hier das Kommunikationsschnittstellenmodul KOM`) des in Fig. 2A dargestellten Feldgerätes 2' durch ein neues Modul (hier das Kommunikationsschnittstellenmodul KOMx`) ausgetauscht wird (vgl. Pfeile 16' und 18' in Fig. 2B). Bezüglich des Ablaufs wird wiederum auf die Beschreibung von Fig. 1B Bezug genommen, wobei nachfolgend die Unterschiede erläutert werden. Die in dem neu eingetauschten Modul KOMx` aktivierte Firmware-Version ist FW03.08.01, während die in dem bisherigen Modul KOM' aktivierte Firmware-Version FW02.11.03 war. Dementsprechend ergibt sich bei dem (automatisiert durchgeführten) Vergleich von der aktivierten Firmware-Version des neu eingetauschten Moduls KOMx` mit den in dem Speicher 8 hinterlegten Firmware-Versioneninformationen eine Abweichung (vgl. Doppelpfeil 20' in Fig. 2B). Dementsprechend wird das Modul KOMx` automatisiert auf die Firmware-Version gemäß den Firmware-Versioneninformationen (vorliegend: FW02.11.03) umgestellt. Bei der dargestellten Ausführungsform erfolgt dies dadurch, dass an Stelle der bisher aktivierten Firmware-Version FW03.08.01 in dem Modul KOMx` die Firmware-Version FW02.11.03 aktiviert wird (vgl. Pfeile 22', 24' in Fig. 2B). Anschließend werden wiederum die, zu dem Modul KOMx` zugehörigen Konfigurationsparameter "KONFIG" aus dem Speicher 8' in das Modul KOMx` geladen (vgl. Pfeil 26' in Fig. 2B). Durch diese Schritte des Umstellens und des Ladens wird erzielt, dass das Modul KOMx` mit der Firmware-Version entsprechend der kompatiblen Firmware-Versionenkombination und mit den Konfigurationseinstellungen des bisher in dem Feldgerät 2' vorgesehenen, entsprechenden Moduls KOM' betrieben wird. Die Schritte der Durchführung des Vergleichs, des Umstellens und des Ladens werden dabei automatisiert ohne Interaktion durch einen Nutzer durchgeführt.

## Patentansprüche

1. Feldgerät, insbesondere Sensor und/oder Aktor, zur Erfassung und/oder Beeinflussung von Prozeßvariablen in der Prozessautomatisierungstechnik, umfassend:
- eine Prozessoreinheit,
- mindestens einen Speicher (8; 8')
- und mindestens zwei Module (MV, S, HMI, KOM, X; MV', S', HMI', KOM', X'),
-- die jeweils in dem Feldgerät (2; 2') austauschbar sind, derart, daß ein Modul, insbesondere aufgrund eines Defektes desselben, durch ein neues Modul ausgetauscht wird,
-- und die jeweils eine Hardware und eine der Hardware zugeordnete Firmware mit einer jeweiligen Firmware-Version aufweisen;
- wobei in dem mindestens einen Speicher (8; 8') Firmware-Versioneninformationen, nämlich Firmware-Versioneninformationen einer kompatiblen Firmware-Versionenkombination der Module (MV, S, HMI, KOM, X; MV', S', HMI', KOM', X') des Feldgerätes (2; 2') gespeichert sind oder darin bei einer erstmaligen Inbetriebnahme des Feldgerätes (2; 2') speicherbar sind, wobei die Firmware-Versioneninformationen die Firmwares der Module (MV, S, HMI, KOM, X) jeweils in der Firmware-Version der kompatiblen Firmware-Versionenkombination aufweisen;
- wobei das Feldgerät (2; 2') derart ausgebildet ist,
-- dass automatisiert ein Vergleich bei mindestens einem Modul (MV, S, HMI, KOM, X; MV', S', HMI', KOM', X') von dessen Firmware-Version mit den in dem Speicher (8; 8') hinterlegten Firmware-Versioneninformationen durchführbar ist
- und dass das Modul (MV, S, HMI, KOM, X; MV', S', HMI', KOM', X') automatisiert auf die Firmware-Version gemäß den Firmware-Versioneninformationen umstellbar ist, falls der Vergleich eine Abweichung der Firmware-Version des Moduls (MV, S, HMI, KOM, X; MV', S', HMI', KOM', X') von der zu dem entsprechenden Modul (MV, S, HMI, KOM, X; MV', S', HMI', KOM', X') gespeicherten Firmware-Version der Firmware-Versioneninformationen ergibt,
- und wobei das Feldgerät (2; 2') derart ausgebildet ist, dass nach einem Starten des Feldgeräts der Vergleich bei sämtlichen Modulen (MV, S, HMI, KOM, X; MV`, S', HMI`, KOM', X') des Feldgerätes, zu denen in den Firmware-Versioneninformationen Informationen über deren Firmware hinterlegt sind, automatisiert durchgeführt wird und gegebenenfalls automatisiert die Umstellung des/der entsprechenden Moduls/Module (MV, S, HMI, KOM, X; MV', S', HMI`, KOM', X') auf die Firmware-Version gemäß den Firmware-Versioneninformationen erfolgt, wobei der automatisierte Vergleich und das automatisierte Umstellen jeweils in Bezug auf sämtliche Module (MV, S, HMI, KOM, X; MV', S', HMI`, KOM', X') des Feldgerätes durch die Prozessoreinheit durchführbar ist.

2. Feldgerät gemäß Anspruch 1, **dadurch gekennzeichnet, dass** die kompatible Firmware-Versionenkombination einer Firmware-Versionenkombination entspricht, wie sie bei der Auslieferung des Feldgerätes (2; 2') vorliegt.

3. Feldgerät gemäß einem der vorangehenden Ansprüche, **dadurch gekennzeichnet, dass**
- das Feldgerät (2; 2') derart ausgebildet ist, dass im Rahmen des automatisierten Umstellens eines Moduls (MV, S, HMI, KOM, X) auf die Firmware-Version gemäß den Firmware-Versioneninformationen die diesem Modul (MV, S, HMI, KOM, X) entsprechende Firmware aus den Firmware-Versioneninformationen in das Modul (MV, S, HMI, KOM, X) geladen wird und darin aktiviert wird.

4. Feldgerät gemäß einem der Ansprüche 1 bis 3 , **dadurch gekennzeichnet, dass** mindestens ein Modul (MV', S', HMI', KOM', X') derart ausgebildet ist, dass es in verschiedenen Firmware-Versionen betreibbar ist und dass in Abhängigkeit von dem Ergebnis des Vergleichs in dem Modul (MV', S', HMI', KOM', X') die Firmware-Version gemäß den Firmware-Versioneninformationen aktivierbar ist.

5. Feldgerät gemäß dem vorherigen Anspruch, **dadurch gekennzeichnet, dass** die Firmware-Versioneninformationen Informationen über die Firmware-Versionen der kompatiblen Firmware-Versionenkombination, nicht aber die Firmwares selbst der kompatiblen Firmware-Versionenkombination, aufweisen.

6. Feldgerät gemäß einem der vorangehenden Ansprüche, **dadurch gekennzeichnet, dass** die der Hardware des jeweiligen Moduls zugeordnete Firmware-Version durch eine Firmware-Versionsnumer angegeben wird.

7. Feldgerät gemäß einem der vorangehenden Ansprüche, **dadurch gekennzeichnet, dass** der mindestens eine Speicher (8; 8') in dem Feldgerät (2; 2') und unabhängig von den Modulen (MV, S, HMI, KOM, X; MV', S', HMI', KOM', X') des Feldgerätes (2; 2') ausgebildet ist.

8. Feldgerät gemäß einem der vorangehenden Ansprüche, **dadurch gekennzeichnet, dass** dieses mindestens eines der nachfolgenden Module aufweist:
a) eine Zentraleinheit;
b) ein Messverstärkermodul (MV; MV');
c) ein Sensormodul (S; S');
d) ein Benutzerschnittstellenmodul (HMI; HMI'); und/oder
e) ein Kommunikationsschnittstellenmodul (KOM; KOM').

9. Feldgerät gemäß einem der vorangehenden Ansprüche, **dadurch gekennzeichnet, dass** das Feldgerät (2; 2') derart ausgebildet ist, dass in dem mindestens einen Speicher (8; 8') mindestens eine der nachfolgenden Informationen speicherbar und/oder aus dem mindestens einen Speicher (8; 8') auslesbar ist/sind:
f) Konfigurationsparameter von mindestens einem Modul (MV, S, HMI, KOM, X; MV', S', HMI', KOM', X') des Feldgerätes (2; 2'); und/oder
g) Informationen zur Geräteintegration des Feldgerätes (2; 2').

10. Feldgerät gemäß einem der vorangehenden Ansprüche, wobei nach Austausch eines Moduls automatisiert das neu eingetauschte Modul mit der Firmware-Version gemäss den Firmware-Versioneninformationen betreibbar ist.

11. Feldgerät gemäß einem der vorangehenden Ansprüche, wobei in den Firmware-Versioneninformationen eindeutig bestimmt ist, mit welchen Firmware-Versionen die einzelnen Module zu betreiben sind, so dass sich die zugehörige, kompatible Firmware-Versionenkombination ergibt.

12. Verfahren zum Langzeit-Erhalten der Firmware-Kompatibilität eines Feldgerätes (2; 2') gemäß einem der vorherigen Ansprüche, **gekennzeichnet durch** nachfolgende Schritte:
A) Speichern von Firmware-Versioneninformationen, nämlich Firmware-Versioneninformationen einer kompatiblen Firmware-Versionenkombination der Module (MV, S, HMI, KOM, X; MV', S', HMI', KOM', X') des Feldgerätes (2; 2') in dem mindestens einen Speicher (8; 8'); wobei die Firmware-Versioneninformationen die Firmwares der Module (MV, S, HMI, KOM, X) jeweils in der Firmware-Version der kompatiblen Firmware-Versionenkombination aufweisen;
- Austauschen von Modulen in dem Feldgerät (2; 2') insbesondere aufgrund eines Defektes, wobei die Module jeweils eine Hardware und eine der Hardware zugeordnete Firmware mit einer jeweiligen Firmware-Version aufweisen;
B) Automatisiertes Durchführen eines Vergleichs bei mindestens einem Modul (MV, S, HMI, KOM, X; MV', S', HMI', KOM', X') des Feldgerätes (2; 2') von dessen Firmware-Version mit den, in dem Speicher (8; 8') hinterlegten Firmware-Versioneninformationen; und
C) Automatisiertes Umstellen des Moduls (MV, S, HMI, KOM, X; MV', S', HMI', KOM', X') auf die Firmware-Version gemäß den Firmware-Versioneninformationen, falls der Vergleich eine Abweichung der Firmware-Version des Moduls (MV, S, HMI, KOM, X; MV', S', HMI', KOM', X') von der, zu dem entsprechenden Modul (MV, S, HMI, KOM, X; MV', S', HMI', KOM', X') gespeicherten Firmware-Version der Firmware-Versioneninformationen ergibt;
- D) Automatisiertes Durchführen des Vergleichs nach einem Starten des Feldgeräts bei sämtlichen Modulen (MV, S, HMI, KOM, X; MV', S', HMI', KOM', X') des Feldgerätes, zu denen in den Firmware-Versioneninformationen Informationen über deren Firmware hinterlegt sind (2; 2'), und gegebenenfalls automatisiertes Erfolgen der Umstellung des/ der entsprechenden Moduls/Module (MV, S, HMI, KOM, X; MV', S', HMI', KOM', X') auf die Firmware-Version gemäß den Firmware-Versioneninformationen.

13. Verfahren gemäß dem vorherigen Anspruch,
- wobei der Schritt des Speicherns durch den Hersteller des Feldgerätes (2; 2') oder bei einer erstmaligen Inbetriebnahme des Feldgerätes (2; 2') durchgeführt wird und dabei Firmware-Versioneninformationen einer ursprünglichen Firmware-Versionenkombination, wie sie bei der Auslieferung des Feldgerätes (2; 2') vorliegt, gespeichert werden;
- und/oder wobei der Schritt des Speicherns nach einer erstmaligen Inbetriebnahme des Feldgerätes (2; 2') durchgeführt wird und dabei Firmware-Versioneninformationen einer kompatiblen Firmware-Versionenkombination, die sich von einer ursprünglichen Firmware-Versionenkombination des Feldgerätes (2; 2') unterscheidet, gespeichert werden.

14. Verfahren gemäß Anspruch 12 oder 13, weiters umfassend: Austauschen eines oder mehrerer der Module des Feldgeräts.

15. Verfahren gemäß Anspruch 12 oder 13, weiters umfassend:
- Austauschen eines der Module des Feldgeräts;
- Starten des Feldgeräts nach dem Austausch des Moduls;
- sowie automatisiertes Durchführen des Vergleichs bei sämtlichen Modulen (MV, S, HMI, KOM, X; MV', S', HMI', KOM', X') des Feldgerätes, zu denen in den Firmware-Versioneninformationen Informationen über deren Firmware hinterlegt sind (2; 2') nach dem Starten des Feldgeräts.

## Claims

1. Field device, particularly a sensor and/or an actuator, designed to measure and/or influence process variables in process automation technology, said device comprising:
- a processor unit,
- at least a memory (8, 8')
- and at least two modules (MV, S, HMI, KOM, X; MV', S', HMI', KOM', X'),
-- which can be replaced in the field device (2, 2') in such a way that a module is replaced by a new module, particularly due to a defect in said module,
-- and which each have a hardware and a firmware assigned to the hardware with a respective firmware version;
- wherein firmware version information, specifically firmware version information of a compatible firmware version combination of the modules (MV, S, HMI, KOM, X; MV', S', HMI', KOM', X') of the field device (2, 2') is saved in the at least one memory (8, 8') or can be saved therein during initial commissioning of the field device (2, 2'), wherein the firmware version information present the firmware of the modules (MV, S, HMI, KOM, X) in the firmware version of the compatible firmware version combination;
- wherein the field device (2, 2') is designed in such a way
-- that, for at least one module (MV, S, HMI, KOM, X; MV', S', HMI', KOM', X'), a comparison can be performed automatically for the module's firmware version with the firmware version information saved in the memory (8, 8'),
-- that the module (MV, S, HMI, KOM, X; MV', S', HMI', KOM', X') can be changed automatically to the firmware version according to the firmware version information if the comparison reveals a difference between the firmware version of the module (MV, S, HMI, KOM, X; MV', S', HMI', KOM', X') and the firmware version of the firmware version information saved for the corresponding module (MV, S, HMI, KOM, X; MV', S', HMI', KOM', X'),
- and wherein the field device (2, 2') is designed in such a way that, after the field device starts, the comparison is performed automatically for all the modules (MV, S, HMI, KOM, X; MV', S', HMI', KOM', X') of the field device for which information about the modules' firmware is stored in the firmware version information and, where applicable, the corresponding module/modules (MV, S, HMI, KOM, X; MV', S', HMI', KOM', X') is/are automatically switched to the firmware version according to the firmware version information, wherein the automated comparison and the automated changeover can be performed by the processor unit in relation to all modules (MV, S, HMI, KOM, X; MV', S', HMI', KOM', X') of the field device.

2. Field device as claimed in Claim 1, **characterized in that** the compatible firmware version combination corresponds to a firmware version combination as when the field device (2, 2') is delivered.

3. Field device as claimed in one of the previous claims, **characterized in that** the field device (2, 2') is designed in such a way that, during the automated switching of a module (MV, S, HMI, KOM, X) to the firmware version according to the firmware version information, the firmware corresponding to said module (MV, S, HMI, KOM, X) is loaded into the module (MV, S, HMI, KOM, X) from the firmware version information where it is activated.

4. Field device as claimed in one of the Claims 1 to 3, **characterized in that** at least one module (MV', S', HMI', KOM', X') is designed in such a way that it can be operated in different firmware versions and that the firmware version can be activated according to the firmware version information depending on the result of the comparison in the module (MV', S', HMI', KOM', X').

5. Field device as claimed in the previous Claim, **characterized in that** the firmware version information comprises information about the firmware versions of the compatible firmware version combination, but not about the firmwares themselves of the compatible firmware version combination.

6. Field device as claimed in one of the previous claims, **characterized in that** the firmware version assigned to the hardware of the respective module is indicated by a firmware version number.

7. Field device as claimed in one of the previous claims, **characterized in that** the at least one memory (8, 8') is implemented in the field device (2, 2') and independently of the modules (MV, S, HMI, KOM, X; MV', S', HMI', KOM', X') of the field device (2, 2').

8. Field device as claimed in one of the previous claims, **characterized in that** the device comprises at least one of the following modules:
a) a central unit;
b) an amplifier module (MV, MV');
c) a sensor module (S, S');
d) a user interface module (HMI, HMI'); and/or
e) a communication interface module (KOM, KOM').

9. Field device as claimed in one of the previous claims, **characterized in that** the field device (2, 2') is designed in such a way that at least one of the following items of information can be saved in the at least one memory (8, 8') and/or can be read out of the at least one memory (8, 8'):
f) configuration parameters of at least one module (MV, S, HMI, KOM, X; MV', S', HMI', KOM', X') of the field device (2, 2'); and/or
g) information on the integration of the field device (2, 2').

10. Field device as claimed in one of the previous claims, wherein, following the replacement of a module, the newly replaced module can be operated automatically with the firmware version according to the firmware version information.

11. Field device as claimed in one of the previous claims, wherein the firmware version information clearly specifies the firmware versions with which the individual modules should be operated in order to obtain the corresponding compatible firmware version combination.

12. Procedure to maintain the long-term firmware compatibility of a field device (2, 2') as claimed in one of the previous claims, wherein said procedure is **characterized by** the following steps:
A) Saving of firmware version information, specifically firmware version information of a compatible firmware version combination of the modules (MV, S, HMI, KOM, X; MV', S', HMI', KOM', X') of the field device (2, 2') in the at least one memory (8, 8'); wherein the firmware version information comprises the firmwares of the modules (MV, S, HM I, KOM, X) in the firmware version of the compatible firmware version combination;
- Replacement of modules in the field device (2, 2'), particularly due to a fault, wherein the modules each have a hardware and a firmware assigned to the hardware with a respective firmware version;
B) Automated performance of a comparison for at least a module (MV, S, HMI, KOM, X; MV', S', HMI', KOM', X') of the field device (2, 2'), comparing the module's firmware version with the firmware version information saved in the memory (8, 8'); and
C) Automatic changing of the module (MV, S, HMI, KOM, X; MV', S', HMI', KOM', X') to the firmware version according to the firmware version information if the comparison reveals a difference between the firmware version of the module (MV, S, HMI, KOM, X; MV', S', HMI', KOM', X') and the firmware version of the firmware version information saved for the corresponding module (MV, S, HMI, KOM, X; MV', S', HMI', KOM', X');
D) Automated performance of the comparison, after starting the field device, for all the modules (MV, S, HMI, KOM, X; MV', S', HMI', KOM', X') of the field device for which information on the modules' firmware is saved in the firmware version information (2, 2 `) and, wherein applicable, automated switching of the corresponding module/modules (MV, S, HMI, KOM, X; MV', S', HMI', KOM', X') to the firmware version according to the firmware version information.

13. Procedure as claimed in the previous claim,
- wherein the step involving the saving of the information is performed by the manufacturer of the field device (2, 2') or during an initial commissioning of the field device (2, 2') and wherein, during said step, firmware version information of an original firmware version combination - as when the field device (2, 2') is delivered - is saved;
- and/or wherein the step involving the saving of information is performed after an initial commissioning of the field device (2, 2') and wherein, during said step, firmware version information of a compatible firmware version combination, which differs from an original firmware version combination of the field device (2, 2'), is saved.

14. Procedure as claimed in Claim 12 or 13, further comprising: the replacement of one or more of the modules of the field device.

15. Procedure as claimed in Claim 12 or 13, further comprising:
- the replacement of one of the modules of the field device;
- the starting of the field device following the replacement of the module;
- and the automated performance of the comparison on all the modules (MV, S, HMI, KOM, X; MV', S', HMI', KOM', X') of the field device for which information about the modules' firmware is stored in the firmware version information (2, 2') after starting the field device.

## Revendications

1. Appareil de terrain, notamment un capteur et/ou un actionneur, destiné à mesurer et/ou à influencer des variables de process dans la technique d'automatisation des process, lequel appareil comprend :
- une unité de traitement,
- au moins une mémoire (8, 8')
- et au moins deux modules (MV, S, HMI, KOM, X ; MV', S', HMI', KOM', X'),
-- lesquels modules sont respectivement interchangeables dans l'appareil de terrain (2, 2'), de telle sorte qu'un module est remplacé par un nouveau module, notamment en raison d'un défaut de ce dernier,
-- et lesquels modules présentent chacun un hardware et un firmware associé au hardware avec une version de firmware respective ;
- des informations de version de firmware, à savoir des informations de version de firmware d'une combinaison compatible de versions de firmware des modules (MV, S, HMI, KOM, X ; MV', S', HMI', KOM', X') de l'appareil de terrain (2, 2') étant mémorisées dans l'au moins une mémoire (8, 8') ou peuvent y être mémorisées lors d'une première mise en service de l'appareil de terrain (2, 2'), les informations de version de firmware présentant les firmware des modules (MV, S, HMI, KOM, X) respectivement dans la version de firmware de la combinaison compatible de versions de firmware ;
- l'appareil de terrain (2, 2') étant conçu de telle sorte
-- qu'une comparaison peut être effectuée de manière automatisée pour au moins un module (MV, S, HMI, KOM, X ; MV', S', HMI', KOM', X') de sa version de firmware avec les informations de version de firmware enregistrées dans la mémoire (8, 8'),
-- que le module (MV, S, HMI, KOM, X ; MV', S', HMI', KOM', X') peut être passé automatiquement à la version de firmware selon les informations de version de firmware si la comparaison révèle un écart entre la version de firmware du module (MV, S, HMI, KOM, X ; MV', S', HMI', KOM', X') par rapport à la version de firmware des informations de version de firmware enregistrées pour le module (MV, S, HMI, KOM, X ; MV', S', HMI', KOM', X') correspondant,
- et l'appareil de terrain (2, 2') étant conçu de telle sorte qu'après un démarrage de l'appareil de terrain, la comparaison est effectuée de manière automatisée pour tous les modules (MV, S, HMI, KOM, X ; MV', S', HMI', KOM', X') de l'appareil de terrain pour lesquels des informations sur leur firmware sont enregistrées dans les informations de version de firmware et, le cas échéant, la conversion du ou des modules (MV, S, HMI, KOM, X ; MV', S', HMI', KOM', X') correspondants à la version de firmware selon les informations de version de firmware, la comparaison automatisée et la conversion automatisée pouvant être effectuées respectivement par rapport à tous les modules (MV, S, HMI, KOM, X ; MV', S', HMI', KOM', X') de l'appareil de terrain par l'unité de traitement.

2. Appareil de terrain selon la revendication 1, **caractérisé en ce que** la combinaison compatible de versions de firmware correspond à une combinaison de versions de firmware telle qu'elle est présente à la livraison de l'appareil de terrain (2, 2').

3. Appareil de terrain selon l'une des revendications précédentes, **caractérisé en ce que** l'appareil de terrain (2, 2') est conçu de telle sorte que, dans le cadre du passage automatisé d'un module (MV, S, HMI, KOM, X) à la version de firmware selon les informations de version de firmware, le firmware correspondant à ce module (MV, S, HMI, KOM, X) est chargé dans le module (MV, S, HMI, KOM, X) à partir des informations de version de firmware et y est activé.

4. Appareil de terrain selon l'une des revendications 1 à 3, **caractérisé en ce qu'**au moins un module (MV', S', HMI', KOM', X') est conçu de telle sorte qu'il peut être exploité dans différentes versions de firmware et qu'en fonction du résultat de la comparaison dans le module (MV', S', HMI', KOM', X'), la version de firmware peut être activée conformément aux informations de version de firmware.

5. Appareil de terrain selon la revendication précédente, **caractérisé en ce que** les informations de version de firmware comprennent des informations sur les versions de firmware de la combinaison compatible de versions de firmware, mais pas les firmware eux-mêmes de la combinaison compatible de versions de firmware.

6. Appareil de terrain selon l'une des revendications précédentes, **caractérisé en ce que** la version de firmware associée au hardware du module respectif est indiquée par un numéro de version de firmware.

7. Appareil de terrain selon l'une des revendications précédentes, **caractérisé en ce que** l'au moins une mémoire (8, 8') est réalisée dans l'appareil de terrain (2, 2') et indépendamment des modules (MV, S, HMI, KOM, X ; MV', S', HMI', KOM', X') de l'appareil de terrain (2, 2').

8. Appareil de terrain selon l'une des revendications précédentes, **caractérisé en ce que** l'appareil comprend au moins l'un des modules suivants :
a) une unité centrale ;
b) un module amplificateur de mesure (MV, MV') ;
c) un module capteur (S, S') ;
d) un module interface utilisateur (HMI, HMI') ; et/ou
e) un module interface de communication (KOM, KOM').

9. Appareil de terrain selon l'une des revendications précédentes, **caractérisé en ce que** l'appareil de terrain (2, 2') est conçu de telle sorte qu'au moins une des informations suivantes peut être stockée dans l'au moins une mémoire (8, 8') et/ou peut être lue à partir de l'au moins une mémoire (8, 8') :
f) les paramètres de configuration d'au moins un module (MV, S, HMI, KOM, X ; MV', S', HMI', KOM', X') de l'appareil de terrain (2, 2') ; et/ou
g) des informations sur l'intégration de l'appareil de terrain (2, 2').

10. Appareil de terrain selon l'une des revendications précédentes, pour lequel, après le remplacement d'un module, le module nouvellement remplacé peut être exploité de manière automatisée avec la version de firmware selon les informations de version de firmware.

11. Appareil de terrain selon l'une des revendications précédentes, pour lequel les informations de version de firmware déterminent clairement avec quelles versions de firmware les différents modules doivent être exploités, de manière à obtenir la combinaison compatible de versions de firmware correspondante.

12. Procédé destiné au maintien à long terme de la compatibilité du firmware d'un appareil de terrain (2, 2') selon l'une des revendications précédentes, lequel procédé est **caractérisé par** les étapes suivantes :
A) Stockage des informations de version de firmware, à savoir des informations de version de firmware d'une combinaison compatible de versions de firmware des modules (MV, S, HMI, KOM, X ; MV', S', HMI', KOM', X') de l'appareil de terrain (2, 2') dans l'au moins une mémoire (8, 8') ; les informations de version de firmware comprenant les firmware des modules (MV, S, HM I, KOM, X) respectivement dans la version de firmware de la combinaison compatible de versions de firmware ;
- Remplacement de modules dans l'appareil de terrain (2, 2'), notamment en raison d'un défaut, les modules présentant chacun un hardware et un firmware associé au hardware avec une version de firmware respective ;
B) Exécution automatisée d'une comparaison pour au moins un module (MV, S, HMI, KOM, X ; MV', S', HMI', KOM', X') de l'appareil de terrain (2, 2') de sa version de firmware avec les informations de version de firmware enregistrées dans la mémoire (8, 8') ; et
C) Conversion automatique du module (MV, S, HMI, KOM, X ; MV', S', HMI', KOM', X') à la version de firmware selon les informations de version de firmware, si la comparaison révèle une différence de version de firmware du module (MV, S, HMI, KOM, X ; MV', S', HMI', KOM', X') par rapport à la version de firmware des informations de version de firmware stockées pour le module (MV, S, HMI, KOM, X ; MV', S', HMI', KOM', X') correspondant ;
D) Exécution automatisée de la comparaison après un démarrage de l'appareil de terrain pour tous les modules (MV, S, HMI, KOM, X ; MV', S', HMI', KOM', X') de l'appareil de terrain pour lesquels des informations sur leur firmware sont enregistrées dans les informations de version de firmware (2, 2 ') et, le cas échéant, conversion automatique du ou des modules (MV, S, HMI, KOM, X ; MV', S', HMI', KOM', X') correspondants à la version de firmware conformément aux informations sur les versions de firmware.

13. Procédé selon la revendication précédente,
- pour lequel l'étape de mémorisation est effectuée par le fabricant de l'appareil de terrain (2, 2') ou lors d'une première mise en service de l'appareil de terrain (2, 2') et des informations de version du firmware d'une combinaison de version de firmware initiale, telle qu'elle existe à la livraison de l'appareil de terrain (2, 2'), sont mémorisées ;
- et/ou pour lequel l'étape de mémorisation est effectuée après une première mise en service de l'appareil de terrain (2, 2') et des informations de version de firmware d'une combinaison compatible de versions de firmware, qui diffère d'une combinaison de version de firmware d'origine de l'appareil de terrain (2, 2'), sont mémorisées.

14. Procédé selon la revendication 12 ou 13, comprenant en outre : le remplacement d'un ou de plusieurs modules de l'appareil de terrain.

15. Procédé selon la revendication 12 ou 13, comprenant en outre :
- le remplacement d'un des modules de l'appareil de terrain ;
- le démarrage de l'appareil de terrain après le remplacement du module ;
- ainsi que l'exécution automatisée de la comparaison pour tous les modules (MV, S, HMI, KOM, X ; MV', S', HMI', KOM', X') de l'appareil de terrain pour lesquels des informations sur leur firmware sont enregistrées dans les informations sur la version du firmware (2, 2') après le démarrage de l'appareil de terrain.
